# EUROPÄISCHE PATENTANMELDUNG

(11) **EP 3 124 515 A1**
(43) Veröffentlichungstag der Anmeldung: **01.02.2017**
(21) Anmeldenummer: 15178558.1
(22) Anmeldetag: 28.07.2015
(51) Int. Cl.: C08G 18/62, C08G 18/69, C08G 18/79, C08G 18/80

(54) **REAKTIVE NICHT WÄSSRIGE DISPERSIONEN FÜR LACKE, KLEB- UND DICHTSTOFFE**

(71) Anmelder: Evonik Degussa GmbH, 45128 Essen (DE)
(72) Erfinder: SPYROU, Emmanouil, 46514 Schermbeck (DE); LOESCH, Holger, 44627 Herne (DE); DIESVELD, Andrea, 48712 Gescher (DE); EWALD, Marion, 45768 Marl (DE); HABERKORN, Niko, 46286 Dorsten (DE)

(57) **Zusammenfassung**

Die Erfindung betrifft reaktive nicht wäßrige Dispersionen für Lacke, Kleb- und Dichtstoffe.

## Beschreibung

Die Erfindung betrifft reaktive nicht wäßrige Dispersionen für Lacke, Kleb- und Dichtstoffe.

Nicht wässrige Dispersionen (non aqueous dispersions, NAD) sind bekannt. Sie bestehen aus einer flüssiger Phase und einer weiteren flüssigen oder festen Phase, die in der ersten Phase feinverteilt vorliegt. Dabei dürfen die verschiedenen Phasen nicht oder kaum in einander löslich sein. Beispiele für solche Dispersionen im Lack-, Klebstoff- oder Dichtstoffbereich findet man in DE102009020638, US5516820 oder auch in DE4423309.

NAD aus zwei reaktiven Komponenten haben den Vorteil, dass Lacke, Kleb- und Dichtstoffe auf ein Substrat aufgetragen werden können, ohne dass hier ein Lösemittel notwendig wäre, welches nach der Reaktion energie- und zeitaufwendig zu entfernen wäre. Damit sind solche lösemittelfreien NAD auch umweltfreundlich.

Im Allgemeinen gibt es einen Bedarf an weiteren reaktiven NAD mit den genannten Eigenschaften. Die Anforderungen an solche reaktiven NAD sind vielfältig. Je nach Einsatzzweck kommen noch eine Reihe von Materialanforderungen dazu.

Aufgabe dieser Erfindung war es, neue nicht wässrige Dispersionen (NAD) für den Lack-, Klebstoff- und Dichtstoffbereich zu finden. Neben der einfachen Handhabbarkeit und Verarbeitbarkeit sollte nur eine kleine Anzahl von Komponenten enthalten sein, um die Fehleranfälligkeit, d.h. die Möglichkeiten des Anwenders in der Formulierung etwas verkehrt zu machen, herabzusetzen und damit Herstellung wirtschaftlicher zu machen.

Diese Aufgabe wurde überraschen gelöst durch eine Kombination aus flüssigen OH-funktionalisierten Polyolefinen und reaktiven Polyurethanen (PUR).

Gegenstand der Erfindung sind nicht wässrige Dispersionen enthaltend
A) mindestens ein flüssiges OH-Gruppen aufweisendes Polyolefin,
B) mindestens eine reaktive Polyurethankomponente,
C) optional weiterer Hilfs- und Zusatzstoffe,
wobei die reaktive Polyurethankomponente B) fein verteilt mit einem mittleren Teilchendurchmesser von d50 < 100 µm, in der flüssigen Phase der Komponente A) vorliegt.

Prinzipiell sind alle flüssigen Polyolefine mit OH-Gruppen als Komponente A) einsetzbar.

Die Komponente A) besteht bevorzugt aus OH-funktionalisiertem Polymerisationsprodukten von 1,3-Dienen. Solche Produkte sind bekannt und wurden beschrieben z.B. in den Dokumenten US 3055952, US 333015, US, 3427,366, US 3673168, US 3714110, US 3796762, US 4460801, US 4518770, US 4670518, US 4721754, US 4883859, US 5043484,

EP 2 669 300, JP 58008844, BG 41562, JP 57127711, RU 193715, BR 7707285, BR 1977-200 sowie in J.N. Henderson, Encycl. Polym. Sci Eng. 1985, 2, 515-536 und W. Heitz, Telechelic Polymers: Synthesis an Applications, als auch in der Publikation M. Zhao et al., C.A. Selects, p. 12 (19) 1986.

Das Molekulargewicht von der Polymeren A) liegt im Allgemeinen zwischen 100 und 20000 g/Mol, bevorzugt zwischen 200 und 5000 g/ Mol. Die OH-Zahl kann zwischen 5 und 500 mg KOH/g liegen, bevorzugt zwischen 30 und 150 mg KOH/ g. Die Funktionalität beträgt im mittel mindestens 1,5 OH-Gruppen im Molekül, bevorzugt größer oder gleich 2, ganz besonders bevorzugt zwischen 2 und 3.

Bevorzugt werden flüssige Polybutadiene-1,3 mit Molekulargewichten zwischen 100 und 20000 g/Mol, besonders bevorzugt zwischen 200 und 5000 g/ Mol. Die OH-Zahl kann zwischen 5 und 500 mg KOH/g liegen, bevorzugt zwischen 30 und 150 mg KOH/ g. Die Funktionalität beträgt im mittel mindestens 1,5 OH-Gruppen im Molekül, bevorzugt größer oder gleich 2, ganz besonders bevorzugt zwischen 2 und 3.

Bevorzugt wird ebenfalls ein flüssiges Polybutadien mit zwei endständigen OH-Gruppen und sowie ggf. weiteren OH-Gruppen im Molekül mit einer OH-Zahl zwischen 40 und 60 mg KOH/g und einem mittlerem Molekulargewicht von 3500 bis 4500 g/mol (z.B. POLYVEST EP HT, Evonik) eingesetzt.

Als PUR-Komponente B) werden mit Blockierungsmitteln blockierte oder intern blockierte Di- und Polyisocyanate eingesetzt. Bei den intern blockierten Isocyanaten handelt es sich um so genannte Uretdione.

Die erfindungsgemäß eingesetzten Di- und Polyisocyanate als Ausgangsverbindungen zur Herstellung der PUR-Komponente B) können ausbeliebigen aromatischen, aliphatischen, cycloaliphatischen und/oder (cyclo)aliphatischen Di- und/oder Polyisocyanaten bestehen.

Als aromatische Di- oder Polyisocyanate sind prinzipiell alle bekannten aromatischen Verbindungen geeignet. Besonders geeignet sind 1,3- und 1,4-Phenylendiisocyanat, 1,5-Naphthylen-diisocyanat, Toluidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat, Tetramethylxylylendiisocyanat und Triisocyanatotoluol.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H12MDI. Beispiele sind Cyclohexandiisocyanat, Methylcyclohexandiisocyanat, Ethylcyclohexandiisocyanat, Propylcyclohexandiisocyanat, Methyldiethylcyclohexandüsocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und-triisocyanate. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexyl-isocyanat, 2,4'-Methylenbis(cyclohexyl)diisocyanat, 1,4-Diisocyanato-4-methyl-pentan.

Bevorzugt werden Polyisocyanate ausgewählt aus Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendüsocyanat/2,4,4-Trimethylhexamethylendiisocyanat (TMDI), Norbornandiisocyanat (NBDI) eingesetzt. Ganz besonders bevorzugt werden Polyisocyanate ausgewählt aus IPDI, HDI, TMDI und H12MDI eingesetzt, wobei auch die Isocyanurate einsetzbar sind.

Selbstverständlich können auch Gemische der Di- und Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und HDI.

Bevorzugte Blockierungsmittel sind ausgewählt aus Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol.

Die besonders bevorzugt verwendeten PUR-Komponente B) sind Isophorondiisocyanat-Addukte, die Isocyanurat-Gruppierungen und ε-Caprolactam blockierte Isocyanatstrukturen enthalten.

In einer zweiten, bevorzugten Ausführungsform liegt die PUR-Komponente B) mit internen Blockierungen vor, also als Uretdiongruppen enthaltende Polyisocyanate. Die interne Blockierung erfolgt über eine Dimerbildung über Uretdion-Strukturen, die bei erhöhter Temperatur wieder in die ursprünglich vorhandenen Isocyanat-Strukturen zurückspalten und damit die Vernetzung mit dem Binder in Gang setzen.

Uretdiongruppen enthaltende Polyisocyanate sind wohlbekannt und werden beispielsweise in US 4,476,054, US 4,912,210, US 4,929,724 sowie EP 417603 beschrieben. Ein umfassender Überblick über industriell relevante Verfahren zur Dimerisierung von Isocyanaten zu Uretdionen liefert das J. Prakt.Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden.

Grundsätzlich ist zur Herstellung von Uretdiongruppen enthaltenden Polyisocyanaten eine breite Palette von Isocyanaten geeignet. Es können alle oben genannten Di- und Polyisocyanate verwendet werden.

Bevorzugt werden zur Herstellung der Uretdiongruppen enthaltenden Komponente B) Polyisocyanate ausgewählt aus Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethyiendiisocyanat/2,4,4-Trimethylhexamethylendiisocyanat (TMDI), Norbornandiisocyanat (NBDI) eingesetzt. Ganz besonders bevorzugt werden Polyisocyanate ausgewählt aus IPDI, HDI, TMDI und H12MDI eingesetzt, wobei auch die Isocyanurate einsetzbar sind.

Ganz besonders bevorzugt wird das Uretdion von IPDI und/oder HDI verwendet.

Es können auch Mischungen von beliebigen Uretdionen eingesetzt werden.

Die Umsetzung dieser Uretdiongruppen enthaltenden Polyisocyanate zu Uretdiongruppen haltigen PUR-Komponente B) beinhaltet die Reaktion der freien NCOGruppen mit hydroxylgruppenhaltigen Monomeren oder Polymeren, wie z.B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 80325 524). Bevorzugt werden Polyester und monomere Dialkohole.

Bevorzugte Uretdiongruppen aufweisende PUR-Komponenten B) haben einen freien NCO-Gehalt von weniger als 5 Gew.-% und einen Gehalt an Uretdiongruppen von 3 bis 25 Gew-%, bevorzugt 6 bis 18 Gew-% (berechnet als C2N2O2, Molekulargewicht 84 g/mol).

Außer den Uretdiongruppen können die PUR-Komponenten B) auch Isocyanurat-, Biuret-,Allophanat-, Urethan- und/oder Harnstoff-Strukturen aufweisen.

Bevorzugt werden Uretdiongruppen aufweisende Verbindungen als PUR-Komponente B) eingesetzt.

Die PUR-Komponente B) liegt bevorzugt unterhalb von 40 °C in fester Form und oberhalb von 125 °C in flüssiger Form vor.

Die Komponente B) kann falls erforderlich fein vermahlen und gesiebt werden. Geeignete Mahlwerkzeuge und Siebaggregate z.B. Kugelmühlen, Sichtermühlen usw. findet man z.B. in "Powder Coatings, Chemistry and Technology, Vincentz Network, Hannover 2004, von Pieter Gillis de Lange auf den S. 274-295.

Gegenstand der Erfindung ist auch ein Verfahren zur Herstellung von nicht wässrigen Dispersionen, enthaltend
A) mindestens ein flüssiges OH-Gruppen aufweisendes Polyolefin,
B) mindestens eine reaktive Polyurethankomponente,
C) optional weiterer Hilfs- und Zusatzstoffe,
wobei die reaktive Polyurethankomponente B) fein verteilt mit einem mittleren Teilchendurchmesser von d50 < 100 µm, in der flüssigen Phase der Komponente A) vorliegt, dadurch gekennzeichnet, dass die Komponenten A) und B) und optional C) in Aggregaten gemischt und dispergiert werden.

Die Komponenten A) und B) und optional C) werden in geeigneten Aggregaten gemischt (z.B. Rührkessel, Statikrührer, Extruder, Dispermaten) und dispergiert. Die Verwendung von Hilfsmittel (z.B. Glaskugeln, Zirkonoxidkugeln usw.) ist ebenfalls möglich. Die reaktive Polyurethankomponente B) liegt fein verteilt mit einem mittleren Teilchendurchmesser von d50 < 100 µm, in der flüssigen Phase der Komponente A) vor.

Das Massenverhältnis von A): B) kann zwischen 1:99 und 99:1 liegen, bevorzugt zwischen 50:50 und 95:5. Bevorzugt wird dabei ein NCO:OH Verhältnis zwischen 5:1 und 1:5 eingestellt, besonders bevorzugt zwischen 2:1 und 1:2.

Als optionale Komponente C) kommen in Frage z.B. Verlaufsmittel, Mattierungsmittel, Entgasungsmittel, UV-Stabilisatoren, Radikalfänger, Haftvermittler, Pigmente, Füllstoffe, Katalysatoren, Inhibitoren und/oder Hilfslösemittel enthalten.

Katalysatoren können in 0,01 bis 5,0 Gew.-% bezogen auf die Komponenten A) und B) enthalten sein, wobei diese Katalysatoren der Komponente A) und/oder der Komponente B) zugemischt werden können.

Bevorzugt werden als Katalysatoren C) metallorganische Verbindungen wie Dibutylzinndilaurat, Zinkoctoat oder Bismuthneodecanoat, und/oder tertiäre Amine, besonders bevorzugt 1,4-Diazabicylco[2.2.2.]octan verwendet. Tertiäre Amine werden insbesondere in Konzentrationen zwischen 0,001 und 1 Gew.-% verwendet. Diese erfindungsgemäß eingesetzten reaktiven Polyurethanzusammensetzungen können beispielsweise bei normalen Bedingungen, z.B. mit DBTL-Katalyse, ab 160 °C, üblicherweise ab ca. 180-220 °C ausgehärtet werden.

Außerdem können im Falle von Uretdiongruppen haltien Polyurethankomponenten B) auch sehr wirkungsvolle Katalysatoren C) auf Basis von quaternären Ammoniumsalzen oder Phosphoniumsalzen eingesetzt werden, sowie auch Acetylacetonate oder Amidine, allein oder in Mischungen. Bevorzugt aus diesen Gruppen werden Katalysatoren ausgewählt Tetraethylammoniumbenzoat, Zinkacetylacetonat und Diazabicycloundekan (DBU), sowie Diazabicylononan (DBN), eingesetzt. Unter Verwendung solcher Katalysatoren kann die Härtungstemperatur bis auf 100 °C, bevorzugt auf 140 °C gesenkt werden.

Im Fall von sehr speziellen Katalysatoren z.B. 1,2-Dimethyl-1,4,5,6-Tetrahydropyrimidin kann die Härtungstemperatur sogar bis auf Raumtemperatur gesenkt werden.

Gegenstand der Erfindung ist auch die Verwendung von nicht wässrigen Dispersionen, enthaltend
A) mindestens ein flüssiges OH-Gruppen aufweisendes Polyolefin,
B) mindestens eine reaktive Polyurethankomponente,
C) optional weiterer Hilfs- und Zusatzstoffe,
wobei die reaktive Polyurethankomponente B) fein verteilt mit einem mittleren Teilchendurchmesser von d50 < 100 µm, in der flüssigen Phase der Komponente A) vorliegt, in Lacken, Klebstoffen und Dichtstoffen.

### Beispiele

### Beispiel 1 (erfindungsgemäß)

42,5 g POLYVEST EP HT (hydroxyfunktionelles Polybutadien, OH-Zahl 50 mg KOH / Gramm, Evonik Industries AG) wurden mit 7,5 g VESTAGON BF 1320 (Uretdiongruppen haltiger Polyurethanhärter, NCO-Gehalt 13,8 Gew.-%, Evonik Industries AG) und 100 g Glaskugeln (3 mm Durchmesser) 3h in einem Dispermaten bei 2000 Upm gerührt. Die Glaskugeln wurden mit einem 400 µm Filter abgetrennt. Die verbliebene Dispersion (NCO/OH = 1:1,5) änderte ihre Viskosität (8,4 Pa*s) innerhalb von drei Monaten bei RT nicht. Sie wurde mittels einer 50-µm Rakel auf ein entfettetes Stahlblech gerakelt. Nach dem Einbrennen (30 min bei 200°C) erhielt man eine chemikalienfeste Beschichtung (MEK-Test >100 Doppelhübe) mit einer Pendelhärte (DIN 53157) von 80 s und einer Erichsentiefung (DIN 53 156) von 6,5 mm. Der Kugelschlag (DIN EN ISO 6272) (dir/indir) betrug >80/60 inch*lbs.

### Beispiel 2 (erfindungsgemäß)

38,5 g POLYVEST EP HT (hydroxyfunktionelles Polybutadien, OH-Zahl 50 mg KOH / Gramm, Evonik Industries AG) wurden mit 12,5 g VESTAGON BF 1320 (Uretdiongruppen haltiger Polyurethanhärter, NCO-Gehalt 13,8 Gew.-%, Evonik Industries AG) und 100 g Glaskugeln (3 mm Durchmesser) 3h in einem Dispermaten bei 2000 Upm gerührt. Die Glaskugeln wurden mit einem 400 µm Filter abgetrennt. Die verbliebene Dispersion (NCO/OH = 1,2:1) änderte ihre Viskosität (11,9 Pa*s) innerhalb von drei Monaten bei RT nicht. Sie wurde mittels einer 50-µm Rakel auf ein entfettetes Stahlblech gerakelt. Nach dem Einbrennen (30 min bei 200°C) erhielt man eine chemikalienfeste Beschichtung (MEK-Test >100 Doppelhübe) mit einer Pendelhärte (DIN 53157) von 68 s und einer Erichsentiefung (DIN 53 156) von 8,0 mm. Der Kugelschlag (DIN EN ISO 6272) (dir/indir) betrug >80/60 inch*lbs.

## Patentansprüche

1. Nicht wässrige Dispersionen enthaltend
A) mindestens ein flüssiges OH-Gruppen aufweisendes Polyolefin,
B) mindestens eine reaktive Polyurethankomponente,
C) optional weiterer Hilfs- und Zusatzstoffe,
wobei die reaktive Polyurethankomponente B) fein verteilt mit einem mittleren Teilchendurchmesser von d50 < 100 µm, in der flüssigen Phase der Komponente A) vorliegt.

2. Dispersionen nach Anspruch 1, wobei das Massenverhältnis von A):B) zwischen 1:99 und 99:1 lieget, bevorzugt zwischen 50:50 und 95:5.

3. Dispersionen nach mindestens einem der vorherigen Ansprüche, **dadurch gekennzeichnet, dass** das NCO:OH Verhältnis zwischen 5:1 und 1:5 beträgt, bevorzugt zwischen 2:1 und 1:2.

4. Dispersionen nach mindestens einem der vorherigen Ansprüche, **dadurch gekennzeichnet, dass** das Molekulargewicht der Polymeren A) zwischen 100 und 20000 g/Mol, bevorzugt zwischen 200 und 5000 g/ Mol liegt.

5. Dispersionen nach mindestens einem der vorherigen Ansprüche, **dadurch gekennzeichnet, dass** die Funktionalität im Mittel mindestens 1,5 OH-Gruppen im Molekül beträgt, bevorzugt größer oder gleich 2, ganz besonders bevorzugt zwischen 2 und 3.

6. Dispersionen nach mindestens einem der vorherigen Ansprüche, **dadurch gekennzeichnet, dass** flüssige Polybutadiene-1,3 mit Molekulargewichten zwischen 100 und 20000 g/Mol, bevorzugt zwischen 200 und 5000 g/ Mol.

7. Dispersionen nach mindestens einem der vorherigen Ansprüche, **dadurch gekennzeichnet, dass** flüssige Polybutadiene-1,3 mit OH-Zahl kann zwischen 5 und 500 mg KOH/g liegen, bevorzugt zwischen 30 und 150 mg KOH/ g.

8. Dispersionen nach mindestens einem der vorherigen Ansprüche X, **dadurch gekennzeichnet, dass** die Funktionalität im mittel mindestens 1,5 OH-Gruppen im Molekül, bevorzugt größer oder gleich 2, ganz besonders bevorzugt zwischen 2 und 3 liegt.

9. Dispersionen nach mindestens einem der vorherigen Ansprüche, **dadurch gekennzeichnet, dass** als PUR-Komponente B) mit Blockierungsmitteln blockierte oder intern blockierte Di- und Polyisocyanate enthalten sind.

10. Dispersionen nach mindestens einem der vorherigen Ansprüche, **dadurch gekennzeichnet, dass** Di- oder Polyisocyanate als Ausgangsverbindungen zur Herstellung der PUR-Komponente B) ausgewählt aus Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) eingesetzt werden, wobei auch die Isocyanurate einsetzbar sind.

11. Dispersionen nach mindestens einem der vorherigen Ansprüche, **dadurch gekennzeichnet, dass** Di- oder Polyisocyanate zur Herstellung der PUR-Komponente B) ausgewählt aus IPDI, HDI, TMDI und H12MDI, eingesetzt werden.

12. Dispersionen nach mindestens einem der vorherigen Ansprüche, **dadurch gekennzeichnet, dass** Uretdiongruppen haltigen Polyisocyanate als PUR-Komponente B) enthalten sind.

13. Dispersionen nach mindestens einem der vorherigen Ansprüche, **dadurch gekennzeichnet, dass** die Uretdiongruppen aufweisende PUR-Komponenten B) einen freien NCO-Gehalt von weniger als 5 Gew.-% und einen Gehalt an Uretdiongruppen von 3 bis 25 Gew-%, bevorzugt 6 bis 18 Gew-%, aufweisen.

14. Dispersionen nach mindestens einem der vorherigen Ansprüche, **dadurch gekennzeichnet, dass** Katalysatoren in 0,01 bis 5,0 Gew.-%, bezogen auf die Komponenten A) und B) enthalten sind, wobei die Katalysatoren der Komponente A) und/oder der Komponente B) zugemischt werden können.

15. Verfahren zur Herstellung von nicht wässrigen Dispersionen nach mindestens einem der vorherigen Ansprüche, enthaltend
A) mindestens ein flüssiges OH-Gruppen aufweisendes Polyolefin,
B) mindestens eine reaktive Polyurethankomponente,
C) optional weiterer Hilfs- und Zusatzstoffe,
wobei die reaktive Polyurethankomponente B) fein verteilt mit einem mittleren Teilchendurchmesser von d50 < 100 µm, in der flüssigen Phase der Komponente A) vorliegt, **dadurch gekennzeichnet, dass** die Komponenten A) und B) und optional C) in Aggregaten gemischt und dispergiert werden.

16. Verwendung von nicht wässrigen Dispersionen, enthaltend
A) mindestens ein flüssiges OH-Gruppen aufweisendes Polyolefin,
B) mindestens eine reaktive Polyurethankomponente,
C) optional weiterer Hilfs- und Zusatzstoffe,
wobei die reaktive Polyurethankomponente B) fein verteilt mit einem mittleren Teilchendurchmesser von d50 < 100 µm, in der flüssigen Phase der Komponente A) vorliegt, in Lacken, Klebstoffen und Dichtstoffen.
